# EUROPÄISCHE PATENTSCHRIFT

(11) **EP 1 210 523 B1**
(45) Veröffentlichungstag und Bekanntmachung des Hinweises auf die Patenterteilung: **14.01.2004**
(21) Anmeldenummer: 00962347.1
(22) Anmeldetag: 22.08.2000
(51) Int. Cl.: F16C 29/04

(54) **LINEARFÜHRUNG**
LINEAR GUIDE
GUIDE LINEAIRE

(30) Priorität: 03.09.1999 DE 19942058
(43) Veröffentlichungstag der Anmeldung: 05.06.2002
(73) Patentinhaber: INA-Schaeffler KG, 91074 Herzogenaurach (DE)
(72) Erfinder: BRUNK, Michael, 66773 Schwalbach (DE); STEIGNER, Achim, 66903 Dittweiler (DE); SCHINDLER, Reiner, 66894 Krähenberg (DE)
(86) Internationale Anmeldenummer: PCT/EP2000/008156
(87) Internationale Veröffentlichungsnummer: WO 2001/018414

(56) Entgegenhaltungen:
- DE-A- 1 427 645
- DE-U- 9 206 715
- DE-U- 9 209 047
- FR-A- 2 700 322
- US-A- 3 407 011
- US-A- 5 915 840

## Beschreibung

### Gebiet der Erfindung

Die Erfindung betrifft eine Linearführung mit einem Laufwagen, der mit Laufrollen zum Abstützen und Abrollen längs einer Führungsschiene versehen ist, wobei an einem ersten Träger zwei jeweils an der Führungsschiene abrollende Laufrollen paarweise drehbar gelagert sind, während der Träger an einer ersten Wagenplatte des Laufwagens angeordnet ist, wobei der Laufwagen eine weitere Wagenplatte aufweist, mit einem daran angeordneten zweiten Träger und an diesem drehbar gelagerten, an einer weiteren Führungsschiene abrollenden Laufrollen, und wobei die beiden Führungsschienen parallel verlaufend an zwei Längsseiten eines zentralen Schienenträgers befestigt sind.

### Hintergrund der Erfindung

Eine ähnliche Linearführung ist aus dem Dokument DE 92 09 047 U1 bekannt. Diese zeigt einen Führungswagen, bei welchem zur Erzielung eines spielfreien Laufes längs der Führungsschiene im Bereich von Kurven, also gebogenen Streckenabschnitten, zwischen einem schwenkbaren Träger und einer Wagenplatte jeweils im Bereich der Achse einer Laufrolle ein um diese Achse drehbares Axial-Nadellager vorgesehen ist. Ein Laufbahnträger dieses Lagers ist mit der Wagenplatte fest verbunden. Er weist eine Stützfläche auf, die ein Bogensegment bildet, auf dem weniger als die Hälfte der vorhandenen Wälzkörper abrollen. Diese Anordnung ist gewählt worden, um auftretende Belastungsmomente, beispielsweise Momente um die Längsachse der Führungsschiene, von dem Axial-Nadellager und der zugehörigen Stützfläche abzufangen. Sie hat jedoch den Nachteil einer aufwendigen Bauweise und Montage. Es gibt außerdem Anwendungsfälle, bei welchen eine einzige Wagenplatte mit Trägem und daran gelagerten Laufrollen für die Führung eines Maschinenteils und die Übertragung der dabei auftretenden Kräfte und Momente nicht ausreicht.

Aus dem Dokument US 5 915 840 A ist eine Linearführung der eingangs genannten Art bekannt, bei welcher ein erster Träger für ein Paar von Laufrollen als Winkelstück ausgebildet ist, welches an einer Platte angeschweißt ist. Die Platte ist mit einer Kopfschraube an einem oberen Schenkel des Laufwagens befestigt. Dieser Schenkel entspricht der ersten Wagenplatte der erfindungsgemäßen Linearführung. Der zweite Träger für Laufrollen ist ebenso ausgebildet und an einem unteren Schenkel des Laufwagens befestigt, wobei dieser Schenkel der weiteren Wagenplatte der erfindungsgemäßen Linearführung entspricht. Hier ist jedoch zusätzlich eine Einstellschraube vorgesehen. Die Einstellung des Abstandes zwischen dem ersten und dem zweiten Träger muss hier durch Verstellen der Einstellschraube durchgeführt werden, um Verspannungen an den Laufrollen zu vermeiden.

### Zusammenfassung der Erfindung

Der Erfindung liegt die Aufgabe zugrunde, eine Linearführung zu schaffen, deren Laufwagen für die Übertragung großer Kräfte und Momente geeignet ist und der ein gutes Laufverhalten aufweist, so daß Verspannungen der an ihm gelagerten Laufrollen nicht auftreten.

Diese Aufgabe wird erfindungsgemäß dadurch gelöst, daß der Laufwagen als Drehschemel-Laufwagen ausgebildet ist, an welchem jeweils der erste Träger an der ersten Wagenplatte und der zweite Träger an der weiteren Wagenplatte schwenkbar gelagert ist, wobei die drehbare Lagerung der von der ersten Wagenplatte über den ersten Träger gehaltenen Laufrollen als Festlager und die drehbare Lagerung der von der weiteren Wagenplatte über den zweiten Träger gehaltenen Laufrollen als Loslager ausgebildet ist.

Bei dem Festlager können die Laufrollen an dem Träger mit Kugellagern drehbar gelagert sein. Bei dem Loslager ist es dagegen möglich, die Laufrollen an dem Träger mit Zylinderrollenlagern oder mit Nadellagern drehbar zu lagern.

Infolge der Erfindung können die beiden an dem Schienenträger anzubringenden Führungsschienen völlig gleich ausgeführt sein und alle Laufrollen können an ihren Mantelflächen, mit welchen sie an den Führungsschienen abrollen, dasselbe Profil aufweisen. Es ist also nur eine Sorte von Führungsschienen und eventuell nur eine Sorte von Profilrollen erforderlich.

Würde man dagegen den Laufwagen an einer Wagenplatte mit Profillaufrollen für ein Festlager ausrüsten und an der anderen Wagenplatte zylindrische Laufrollen vorsehen, um hier ein Loslager zu erhalten, so wären nicht nur unterschiedliche Laufrollen, sondern auch unterschiedliche Führungsschienen erforderlich. In diesem Fall müßten sich die zylindrischen Laufrollen an einer Führungsschiene mit ebener Lauffläche abstützen, so daß sie sich zum Ausgleich von Ungenauigkeiten der Anschlußkonstruktion in axialer Richtung verschieben und dabei über die ebene Lauffläche gleiten könnten. Eine solche Ausführung hätte den Nachteil, daß von den Rollen im wesentlichen nur radiale Lasten übertragen würden und eine Momentenbelastung kaum möglich wäre. Zur Montage wären also zwei Führungsschienen unterschiedlicher Profilierung notwendig, wodurch jeweils das Lager mit der zylindrischen Laufrolle einer erhöhten Verkippung mit Kantenlauf ausgesetzt wäre, was zu einer Verminderung der Lebens- und Gebrauchsdauer führen könnte.

Bei parallel angeordneten Führungsschienen tritt zwangsläufig das Problem auf, daß aufgrund der Summierung von Toleranzen der Schienen und der Anschlußkonstruktion die Laufrollen in axialer Richtung verspannt werden, falls kein Loslager vorhanden ist. Dies führt zu einer Verminderung der Lebensdauer von Laufrolle und Führungsschiene. Durch die Verwendung eines Loslagerwagens werden diese Probleme vermieden, Lebensdauer und Laufverhalten werden positiv beeinflußt. Ein erfindungsgemäßer Loslagerwagen, bei welchem ein Teil der Laufrollen mit Zylinderrollen gelagert ist, gleicht durch die dadurch geschaffene axiale Verschiebbarkeit des Außenringes des Profilrollenlagers die auftretenden Ungenauigkeiten in axialer Richtung aus. Die Anforderungen an die Anschlußkonstruktion können daher reduziert werden.

Das erfindungsgemäße Funktionsprinzip einer Festlager-Loslager-Kombination an einem Laufwagen läßt sich mit unterschiedlichen Schienentypen verwirklichen. Zur Bildung des Loslagerteils des Laufwagens können also profilierte Laufrollen mit verschiebbarem Außenring verwendet werden. Damit ist es möglich, unter Beibehaltung einer Standardschiene in axialer Rollenrichtung Ungenauigkeiten seitens der Anschlußkonstruktion auszugleichen. Durch diesen Ausgleich wird ein Verspannen der Laufrollen vermieden, was zu einer Verminderung von Verschleiß und Widerstand und einer Erhöhung von Lebensund Gebrauchsdauer der Laufrollen führt.

### Kurze Beschreibung der Zeichnung

Ein Ausführungsbeispiel der Erfindung ist in der Zeichnung dargestellt und wird im folgenden näher beschrieben. Es zeigen:
- Figur 1: einen an Führungsschienen abgestützten Laufwagen in einer Seitenansicht;
- Figur 2: einen Querschnitt durch den Laufwagen und die Führungsschienen gemäß Linie II-II der Figur 1.

### Ausführliche Beschreibung der Zeichnung

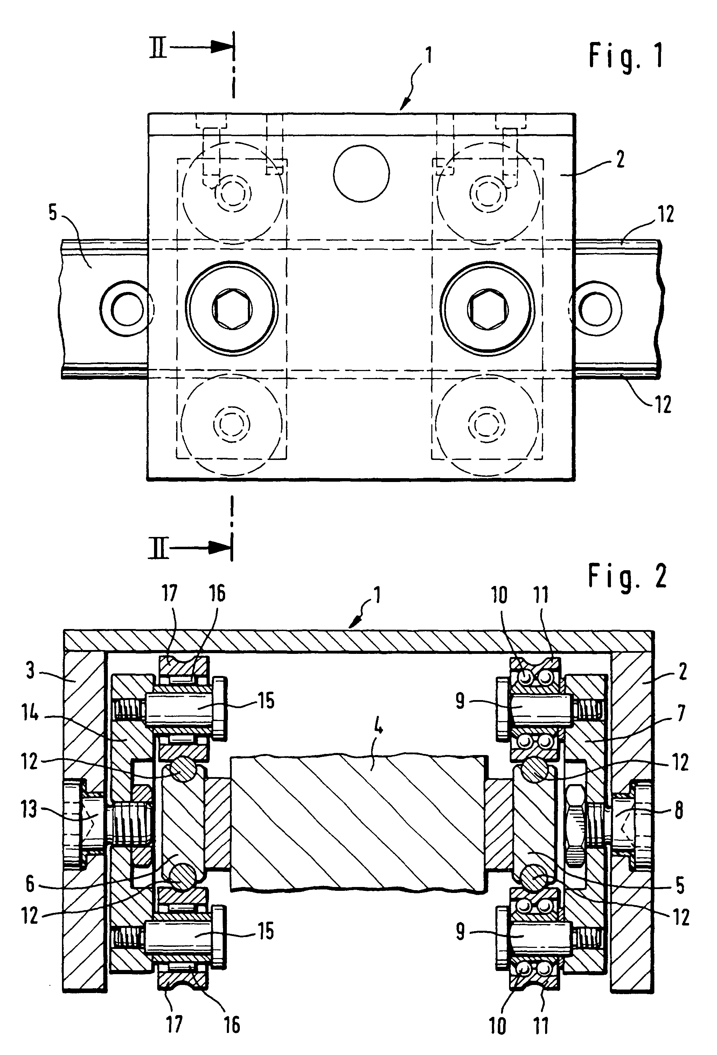

Ein erfindungsgemäßer Laufwagen 1 ist im Querschnitt U-förmig ausgebildet und weist als U-Schenkel eine erste Wagenplatte 2 und eine weitere Wagenplatte 3 auf. Mit diesen umgibt der Laufwagen 1 einen Schienenträger 4, an dessen beiden seitlichen Längsflächen auf der rechten Seite von Figur 2 eine erste Führungsschiene 5 und auf der linken Seite eine weitere Führungsschiene 6 befestigt sind. An der ersten Wagenplatte 2 ist mindestens ein Träger 7 über ein Drehlager 8 mit waagerechter Drehachse schwenkbar gelagert. Der Träger 7 befindet sich auf der Innenseite der ersten Wagenplatte 2 und trägt an seinen beiden Enden waagerecht angeordnete Lagerzapfen 9 für Kugellager 10. Diese dienen der drehbaren Lagerung von Laufrollen 11 mit jeweils profilierter Mantefläche. Die Laufrollen 11 stützen sich an Laufdrähten 12 ab, die in Längsnuten der ersten Führungsschiene 5 angeordnet und dort gehalten sind.

Spiegelbildlich hierzu weist auch die weitere Wagenplatte 3 ein Drehlager 13 für einen Träger 14 auf. An der Innenseite der weiteren Wagenplatte 3 ist mindestens ein solcher Träger 14 schwenkbar gelagert. Er weist an seinen beiden Enden sich waagerecht erstreckende Lagerzapfen 15 für Zylinderrollenlager 16 auf, mit welchen profilierte Laufrollen 17 drehbar gelagert sind. Jede Laufrolle 17 stützt sich wiederum mit ihrer profilierten Mantelfläche an Laufdrähten 12 ab, die in Längsnuten der weiteren Führungsschiene 6 angeordnet und dort befestigt sind.

Die Erfindung ermöglicht es, für diesen Laufwagen 1 zwei gleiche Führungsschienen 5 und 6 und Laufrollen 11 und 17 zu verwenden, die jeweils dasselbe Mantelprofil aufweisen.

### Bezugszahlenliste

- 1: Laufwagen
- 2: erste Wagenplatte
- 3: weitere Wagenplatte
- 4: Schienenträger
- 5: erste Führungsschiene
- 6: weitere Führungsschiene
- 7: erster Träger
- 8: Drehlager
- 9: Lagerzapfen
- 10: Kugellager
- 11: Laufrolle
- 12: Laufdraht
- 13: Drehlager
- 14: zweiter Träger
- 15: Lagerzapfen
- 16: Zylinderrollenlager
- 17: Laufrolle

## Patentansprüche

1. Linearführung mit einem Laufwagen (1), der mit Laufrollen (11) zum Abstützen und Abrollen längs einer Führungsschiene (5) versehen ist, wobei an einem ersten Träger (7) zwei jeweils an der Führungsschiene (5) abrollende Laufrollen (11) paarweise drehbar gelagert sind, während der Träger (7) an einer ersten Wagenplatte (2) des Laufwagens (1) angeordnet ist, wobei der Laufwagen (1) eine weitere Wagenplatte (3) aufweist, mit einem daran angeordneten zweiten Träger (14) und an diesem drehbar gelagerten, an einer weiteren Führungsschiene (6) abrollenden Laufrollen (17), und wobei die beiden Führungsschienen (5, 6) parallel verlaufend an zwei Längsseiten eines zentralen Schienenträgers (4) befestigt sind, **dadurch gekennzeichnet, dass** der Laufwagen (1) als Drehschemel-Laufwagen ausgebildet ist, an welchem jeweils der erste Träger (7) an der ersten Wagenplatte (2) und der zweite Träger (14) an der weiteren Wagenplatte (3) schwenkbar gelagert ist, wobei die drehbare Lagerung der von der ersten Wagenplatte (2) über den ersten Träger (7) gehaltenen Laufrollen (11) als Festlager und die drehbare Lagerung der von der weiteren Wagenplatte (3) über den zweiten Träger (14) gehaltenen Laufrollen (17) als Loslager ausgebildet ist.

2. Linearführung nach Anspruch 1, **dadurch gekennzeichnet, dass** die Laufrollen (11) an dem ersten Träger (7) mit Kugellagern (10) drehbar gelagert sind.

3. Linearführung nach Anspruch 1, **dadurch gekennzeichnet, dass** die Laufrollen (17) an dem zweiten Träger (14) mit Zylinderrollenlagern (16) drehbar gelagert sind.

## Claims

1. Linear guide with a travelling carriage (1) that is provided with track rollers (11) for support and for rolling along a guide rail (5), two track rollers (11) rolling on the guide rail (5) being mounted for rotation in pairs on a first support (7) that is arranged on a first carriage plate (2) of the travelling carriage (1), said travelling carriage (1) comprising a further carriage plate (3) with a second support (14) arranged thereon and with track rollers (17) that roll on a further guide rail (6) while being mounted for rotation on said second support (14), and the two guide rails (5, 6) extending parallel to each other while being fixed on two side walls of a central rail support (4), **characterised in that** the travelling carriage (1) is configured as a pivoted carriage on which the first support (7) is mounted for pivoting on the first carriage plate (2) and the second support (14) is mounted for pivoting on the further carriage plate (3), the rotational mounting of the track rollers (11) that are retained by the first carriage plate (2) via the first support (7) being configured as a fixed bearing, and the rotational mounting of the track rollers (17) that are retained by the further carriage plate (3) via the second support (14) being configured as a floating bearing.

2. Linear guide according to claim 1, **characterised in that** the track rollers (11) are mounted for rotation on the first support (7) through ball bearings (10).

3. Linear guide according to claim 1, **characterised in that** the track rollers (17) are mounted for rotation on the second support (14) through cylindrical roller bearings (16).

## Revendications

1. Guide linéaire ayant un chariot mobile (1) qui est muni de galets de came (11) servant au support et au roulement le long d'un rail de guidage (5), deux galets de came (11) qui roulent sur le rail de guidage (5) étant montés en rotation par paires sur un premier support (7) qui est agencé sur une première plaque (2) du chariot mobile (1), ledit chariot mobile (1) comprenant une autre plaque (3) avec un second support (14) agencé sur celle-ci et avec des galets de came (17) qui roulent sur un autre rail de guidage (6) et sont montés en rotation sur ledit second support (14), les deux rails de guidage (5, 6) s'étendant parallèlement, l'un à l'autre, en étant fixés sur deux parois latérales d'un support central (4) desdits rails, **caractérisé en ce que** le chariot mobile (1) est configuré sous la forme d'un chariot pivotant sur lequel le premier support (7) est monté en pivotement sur la première plaque (2) du chariot et le second support (14) est monté en pivotement sur l'autre plaque (3) du chariot, le montage en rotation des galets de came (11) retenus par la première plaque (2) du chariot par l'intermédiaire du premier support (7) étant configuré sous la forme d'un palier fixe, et le montage en rotation des galets de came (17) retenus par l'autre plaque (3) du chariot par l'intermédiaire du second support (14) étant configuré sous la forme d'un palier libre.

2. Guide linéaire selon la revendication 1, **caractérisé en ce que** les galets de came (11) sont montés en rotation sur le premier support (7) par des roulements à billes (10).

3. Guide linéaire selon la revendications 1, **caractérisé en ce que** les galets de came (17) sont montés en rotation sur le second support (14) par des roulements à rouleaux cylindriques (16).
